**Europäisches Patentamt**

**European Patent Office**

**Office européen des brevets**

(19)

(11) Veröffentlichungsnummer: **0 122 570**
**A2**

(12) ## EUROPÄISCHE PATENTANMELDUNG

(21) Anmeldenummer: **84103899.5**

(22) Anmeldetag: **07.04.84**

(51) Int. Cl.³: **B 60 T 8/00**

(30) Priorität: **12.04.83 DE 3313097**

(43) Veröffentlichungstag der Anmeldung:
**24.10.84 Patentblatt 84/43**

(84) Benannte Vertragsstaaten:
**DE FR GB IT SE**

(71) Anmelder: **ROBERT BOSCH GMBH**
**Postfach 50**
**D-7000 Stuttgart 1(DE)**

(72) Erfinder: **Leiber, Heinz, Ing. grad.**
**Theodor-Heuss-Strasse 34**
**D-7141 Oberriexingen(DE)**

(74) Vertreter: **Kammer, Arno, Dipl.-Ing.**
**TELDIX GmbH Postfach 10 56 08 Grenzhöfer Weg 36**
**D-6900 Heidelberg 1(DE)**

(54) Antiblockierregelsystem.

(57) Es wird ein Einfachantiblockierregelsystem beschrieben, bei dem der Druck P an den Bremsen der Räder achweise gemeinsam nach select-low und/oder select-high geregelt wird. Zur Verbesserung der Eigenschaften des Systems wird wenigstens dem Vorderradkreis ein Druckmesser zugeordnet. Die Steuerelektronik ist nun so ausgelegt, daß sie bei einer Blockierneigung an den Hinterrädern (bei $t_3$) mit entsprechendem Druckabbau an diesen Rädern einen geringeren Druck $P_{oHA}$ als bei Blockierneigung vorhanden einsteuert und danach den Druck konstant hält (bis $t_6$). Eine Druckerhöhung erfolgt jetzt nur noch, wenn mittels des Druckmessers festgestellt wird, daß sich der Bremsdruck an den Vorderrädern $P_{1VA}$, der dort eine Blockierneigung auslöst, sich in einem vorgegebenen Maße gegenüber dem entsprechenden Druck $P_{oVA}$ in einem vorhergehenden Zyklus erhöht hat.

FIG. 3

EP 0 122 570 A2

R. 18 490

PT-Ka/kn 8. April 1983

ROBERT BOSCH GmbH, 7000 Stuttgart 1

Antiblockierregelsystem

Die Erfindung betrifft ein Antiblockierregelsystem, bei dem gesteuert von die Räder überwachenden Meßwertgebern der Bremsdruck für die Räder jeder Achse gemeinsam von einer die Signale der Meßwertgeber auswertenden Elektronik nach select-low und/oder select-high geregelt wird.

Neben Antiblockierregelsystemen, bei denen der Bremsdruck an den einzelnen Rädern individuell entsprechend dem Verhalten des Rads geregelt wird, sind auch Antiblockierregelsysteme bekannt (z.B. DE-OS 25 18 196), bei denen der Bremsdruck an den Rädern jeder Achse gemeinsam geregelt wird. Es kann dabei jeweils das zuerst Blockierneigung zeigende Rad den Regelablauf bestimmen (select-low) oder auch das zuletzt Blockierneigung zeigende Rad (select-high). Aus der genannten OS ist auch ein abwechselndes Wirksammachen dieser Regelungsarten bekannt.

In machen Anwendungsfällen, z.B. bei langsam fahrenden Nutzfahrzeugen genügt weitgehend dieses vereinfachte System.

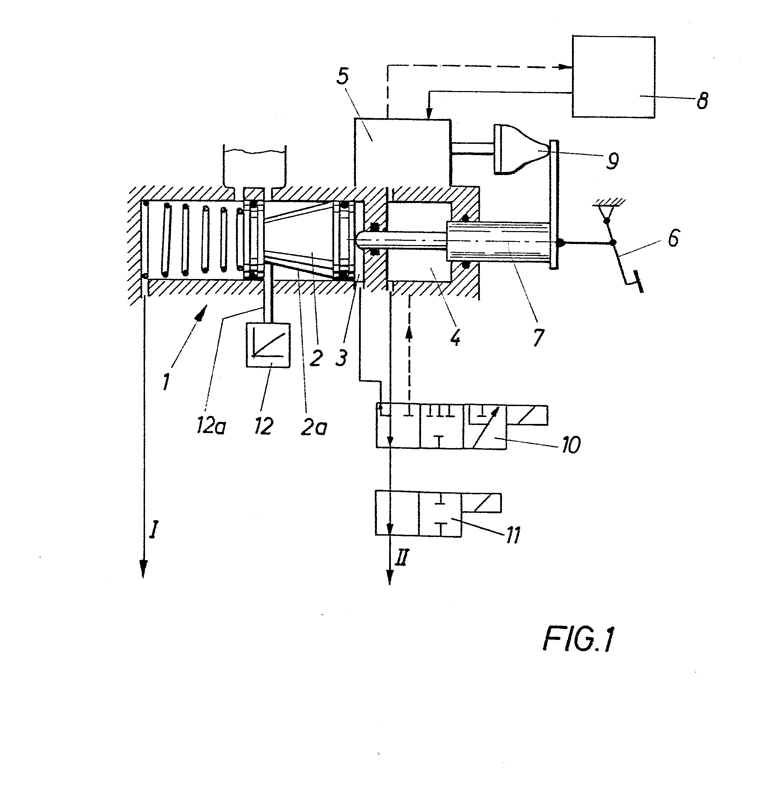

Die erfindungsgemäße Ausgestaltung des Einfachantiblockierregelsystems mit einem Druckfühler zumindest im Vorderachskreis hat den Vorteil, daß weniger Druckmittel verbraucht

...

wird, da ja nur bei einer starken Änderung des Vorderachsdrucks der Hinterachsdruck erhöht wird. Wird pro Bremskreis
je ein Druckfühler verwendet, was insbesondere bei Fremdkraftsystemen von Interesse ist, so hat dies den Vorteil,
daß der Hinterachsbremsdruck genauer eingesteuert werden
kann. Wie später noch gezeigt wird, lassen sich bei Anwendung der Erfindung besonders einfache Systeme (Fig. 1) aufbauen.

Die Verwendung von Druckmeßwertgebern hat zusätzlich den
Vorteil, daß man die Umschaltung der Regelungsarten (select-
low und select-hig) hierdurch steuern kann. Tritt z.B. ein
Vorderachskreis erst bei hohem Druck (z.B. > 60 bar) eine
Instabilität auf, so ist es günstig, nach select-low zu regeln. Ein Umschalten auf select-high bei regennasser Fahrbahn wäre gefährlich und kann durch die genannte Maßnahme
verhindert werden. Bei asymetrischer Fahrbahn ist es günstig,
bei Auftreten einer Blockierneigung von der low-Regelung auf
select-high-Regelung umzuschalten, den vorhandenen Druckwert festzustellen und den Druck im Vorderachskreis um einen
Wert (z.B. auf das 2-3-fache) anzuheben; hierbei wird das
high-Rad im allgemeinen nicht instabil. Eine solche Steuerung des Drucks stellt gegenüber nur der Umschaltung auf
select-high eine Giermomentenbegrenzung dar. In diesem Fall
kann auch das Druckniveau der Hinterachse entsprechend hochgesetzt werden; es muß danach dann natürlich nach select-
high überwacht werden. Außerdem erlaubt die Verwendung der
Druckfühler, daß man die Radgeschwindigkeitsinformation nur
grob auswerten muß, weil man mit Hilfte der Druckfühler einen Druck eisteuern kann. So kann z.B. ein zu großer Schlupf
einen Druckabbau um z.B. 50 % auslösen (ausgehend vom Druck
$P_0$).

Der kleiner werdende Schlupf löst dann die Druckerhöhung auf
einen Prozentsatz von $P_0$ (z.B. 80 %) aus. Dieser Druckaufbau
erfolgt vorzugsweise gestuft.

...

Anhand der Zeichnung werden Ausführungsbeispiele der Erfindung beschrieben. Es zeigen

Fig. 1   ein sehr im Aufwand reduziertes Ausführungsbeispiel des hydraulischen Teils des Systems,

Fig. 2   eine dafür geeignete Ansteuerelektronik,

Fig. 3   den zugehörigen Druckverlauf an den Rädern der beiden Achsen,

Fig. 4   die notwendige Abwandlung der Ventilkombination bei diagonaler Bremskreisaufteilung,

Fig. 5   ein anderes Ausführungsbeispiel des hydraulischen Teils des Systems,

Fig. 6   die zugehörige Ansteuerelektronik,

Fig. 7   den Bremsdruckverlauf an den Radbremsen beider Achsen,

Fig. 8   einen weiteren Druckverlauf

In Fig. 1 ist mit 1 ein Hauptbremszylinder mit Kolben 2 dargestellt. Mit 3 ist eine Steuerkammer, mit 4 eine Druckkammer, mit 5 ein Bremsventil, das über ein Pedal 6 und einen Wegsimulator 9 betätigt wird, und mit 8 eine Druckversorgung bezeichnet. Ein Kolben 7 erzeugt eine Rückwirkung des vom Bremsventil in der Druckkammer 4 eingesteuerten Druck auf das Pedal. Ein Regelventil das als Dreistellungsventil (4/3 Ventil) ausgebildet ist, trägt das Bezugszeichen 10. Ein Sperrventil (2/2 Ventil) das Bezugszeichen 11. Der am Hauptbremszylinder 1 angeschlossene Bremskreis I bedient die Vorderradbremsen; der an den Ausgang des Sperrventils 11 angeschlossene Bremskreis II die Hinterradbremsen. Mit 12 ist ein Meßwertgeber bezeichnet, der über einem Stößel 12a und die Schräge 2a des Kolbens 2 betätigt wird und ein von der Auslenkung des Kolbens und damit auch des Bremsdrucks abhängiges Signal erzeugt.

Bei Blockierneigung variiert das Regelventil 10 den Bremsdruck in beiden Bremskreisen I und II. In der gezeigten

...

0122570

Stellung kann in beiden Kreisen Druck aufgebaut werden, in der zweiten Stellung wird der Druck in beiden Kreisen konstant gehalten und in der dritten Stellung wird Druck in beiden Kreisen abgebaut. Die zusätzliche Verwendung des Sperrventils 11 erlaubt es jedoch, den Druck im Kreis II konstant zu halten, wenn er im Kreisl I auf- oder abgebaut wird.

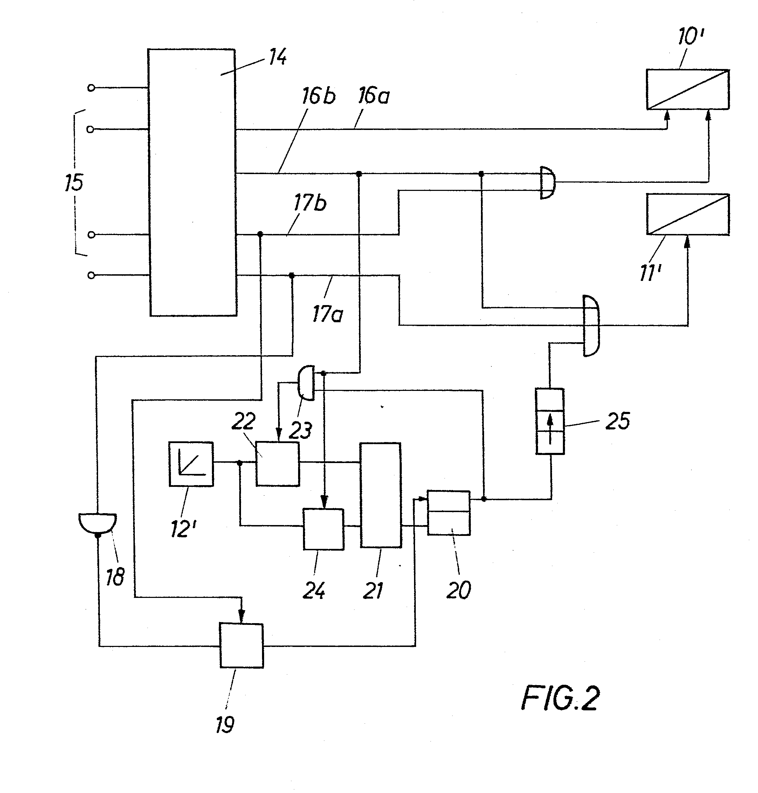

In Fig. 2 ist eine mögliche Ansteuerschaltung für die Ventile der Fig. 1 dargestellt. Das Dreistellungsventil ist hier mit 10' und das Zweistellungsventil mit 11' bezeichnet. Einem Block 14 werden über Klemmen 15 die Signale der den Rädern zugeordneten Meßwertgeber zugeführt. Der Block 14 gibt über eine Leitung 16a ein Signal ab, wenn an den Vorderrädern Druck kontantgehalten werden soll, und über eine Leitung 16b, wenn dort Druck abgesenkt werden soll. Auf einer Leitung 17a wird ein Signal abgegeben, wenn an den Hinterrädern eine Druckkonstanthaltung gebraucht wird und über eine Leitung 17b dann, wenn dort eine Druckabsenkung erforderlich ist. Es ist hier offen gelassen, nach welchen Kriterien eine Blockierneigung erkannt wird, nach welchen Kriterien geregelt wird und ob die Regelung nach select-low und/oder select-high erfolgt. Jedoch ist unterstellt, daß der Druckaufbau gepulst durchgeführt wird. Die Leitung 17b ist mit einem Zeitglied 19 verbunden. Die Länge des Druckabsenksignals auf der Leitung 17b bestimmt die Verzugszeit des Zeitglieds 19. Nach Beendigung der Druckkonstanthaltephase (Ende Signal auf Leitung 17a) läuft die Verzugszeit des Zeitglieds 19 an. In dieser Zeit kann Druck aufgebaut werden. Die Verzugszeit ist so bemessen, daß der in dieser Zeit erreichte Druck unterhalb des Drucks bei Auslösung der Absenkung bleibt. Nach Ablauf der Verzugszeit wird ein bistabiles Glied 20 gekippt, das dann das Ventil 11' ansteuert und somit Druckkonstanthaltung an den Hinterrädern bewirkt. Zu-

...

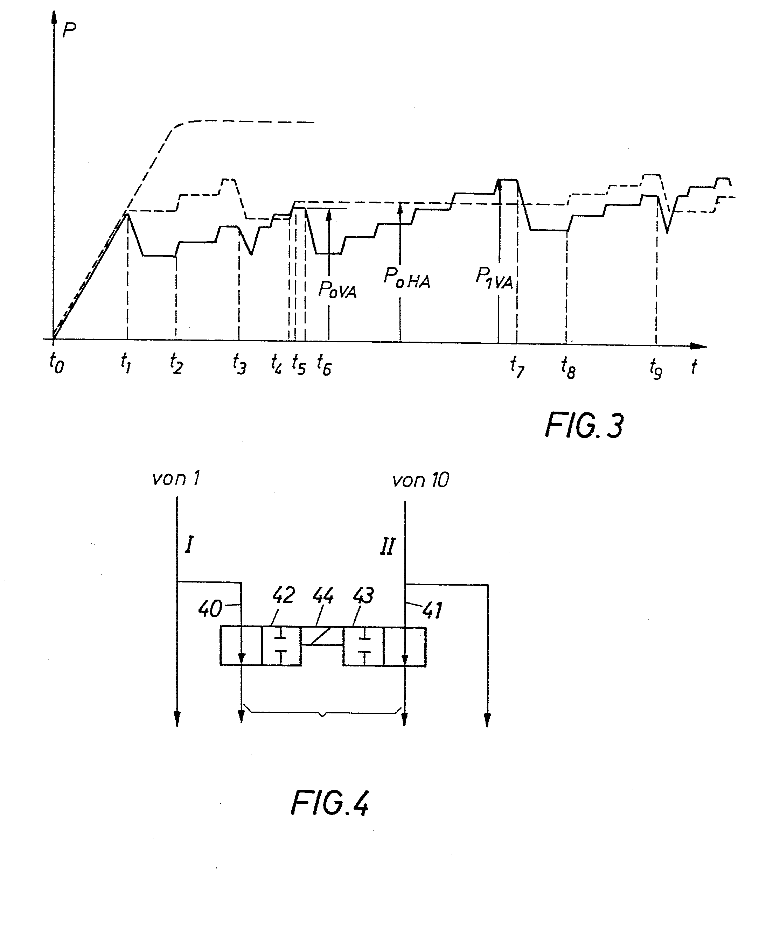

rückgekippt wird das bistabile Glied 20 über einen Vergleicher 21. Dieses gibt ein Resetsignal ab, wenn die den beiden Drücken entsprechenden Signale in einer bestimmten Relation zueinander stehen. Dem Vergleicher wird ein in einem Speicher 22 gespeichertes Signal zugeführt, das dem Druckwert entspricht, der nach einer Absenkung an den Hinterrädern zu Beginn der folgenden Absenkung an den Vorderrädern vorhanden ist. Das Einspeichersignal entsteht am Ausgang eines Und-Gatters 23, wenn das bistabile Glied 20 gekippt ist und auf Leitung 16b ein Absenksignal auftritt. Über ein Tor 24 wird dem Vergleicher noch ein zweiter Druckwert zugeführt, wenn für den Vorderradkreis ein weiteres Druckabsenksignal auftritt. Der Vergleicher 21 gibt - wie gesagt - ein Resetsignal ab, wenn dieser Druckwert um einen bestimmten Wert über dem Druckwert zu Beginn der vorhergehenden Druckabsenkung im Vorderradkreis liegt. Mögliche Druckverläufe, die sich aufgrund dieser Ansteuerung und Ausbildung der Bremskreise ergeben, sind in Fig. 3 dargestellt. Dort ist der Verlauf des Vorderradbremsdrucks ausgezogen und der des Hinterrad-bremsdrucks gestrichelt dargestellt. Bei $t_0$ beginnt die Bremsung, bei $t_1$ wird eine Blockierneigung an den Vorderrädern angenommen und der Bremsdruck dort abgesenkt. Während der Druckabsenkung wird das Ventil 11' angesteuert und somit im Hinterachskreis Druck konstant gehalten. Nach Beendigung ($t_2$) der Druckhaltephase (2. Stellung des Ventils 10') wird der Druck in beiden Kreisen hochgepulst.

Es ist unterstellt, daß bei $t_3$ eine Blockierneigung im Hinterachskreis auftritt. Die Ansteuerung des Ventils 10' (in die 3. Stellung) über die Leitung 17b läßt die Drücke in beiden Kreisen absinken. In der Haltephase des Drucks an den Hinterrädern ($t_3$ bis $t_4$) mittels des Ventils 11' wird der Druck im Vorderradkreis wieder hochgepulst. Die Druckanhebung im Hinterradbremskreis geschieht wie oben bereits erläutert zeitgesteuert und in Abhängigkeit von der vorherigen Druckabsenkung so, daß der eingesteuerte Bremsdruck $P_{oHA}$ (nach $t_5$) kleiner als der Druck von der Druckabsenkung (bei $t_3$) ist. Der Druck im Hinterradbremskreis wird nun solange konstant gehalten (wenn keine Blockierneigung auftritt), bis aus dem Verhalten des Bremsdrucks im Vorderachskreis geschlossen werden kann, daß sich das μ des Untergrunds erhöht hat. Dies wird mittels des Druckgebers 12' und der Glieder 21 bis 24 dadurch ermittelt, daß ein dem Bremsdruck $P_{oVA}$ zum Zeitpunkt der nächstfolgenden Druckabsenkung im Vorderachskreis ($t_6$) entsprechendes Signal gespeichert wird und danach bei der folgenden Druckabsenkung im Vorderachsbremskreis (bei $t_7$) festgestellt wird, ob der Druck ($P_{1VA}$) zu Beginn dieser Absenkung um einen bestimmten Wert (Prozentsatz oder absoluter Wert) über dem Druckwert $P_{oVA}$ liegt. Ist dies der Fall, so wird das Glied 20 rückgesetzt und das Ventil 11' etwas zeitverzögert (Zeitglied 25) zur Vermeidung eines Druckabbaus wieder freigegeben. Damit wird ab $t_8$ wieder Druck gepulst in beiden Kreisen aufgebaut, bis bei $t_9$ vom Hinterachsbremskreis her erneut Druck abgebaut wird.

Fig. 4 zeigt, daß man bei einer diagonalen Bremskreisaufteilung anstelle einer achsweisen Aufteilung wie in Fig. 1 in jede der zu den Hinterachsbremsen führenden Leitungen 40 und 41 ein dem Ventil 11 entsprechendes Ventil 42 und 43 einschalten muß; jedoch können diese Ventile durch einen gemeinsamen Elektromagneten 44 betätigt werden (Doppelventil).

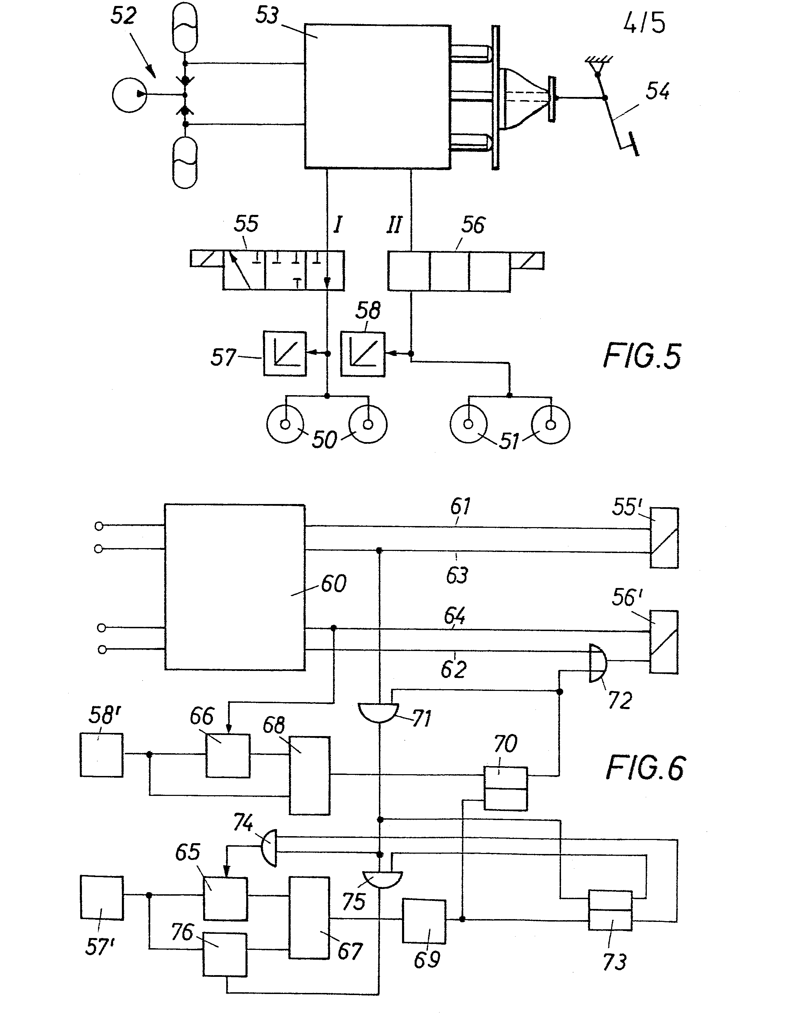

In Fig. 5 werden die Drücke für die Bremsen der beiden Radpaare 50 (Vorderräder) und 51 (Hinterräder) aus einer Druckversorgung mittels zweier im Block 53 untergebrachter und vom Pedal 54 betätigter Bremsventile abgeleitet. In jeden der Bremskreise I und II ist hier ein 3/3 Ventil 55 und 56

...

eingeschaltet, sodaß in beiden Kreisen getrennt Druck aufgebaut, konstantgehalten und abgebaut werden kann. An beide Kreise sind Meßwertgeber für den Druck 57 und 58 angeschaltet.

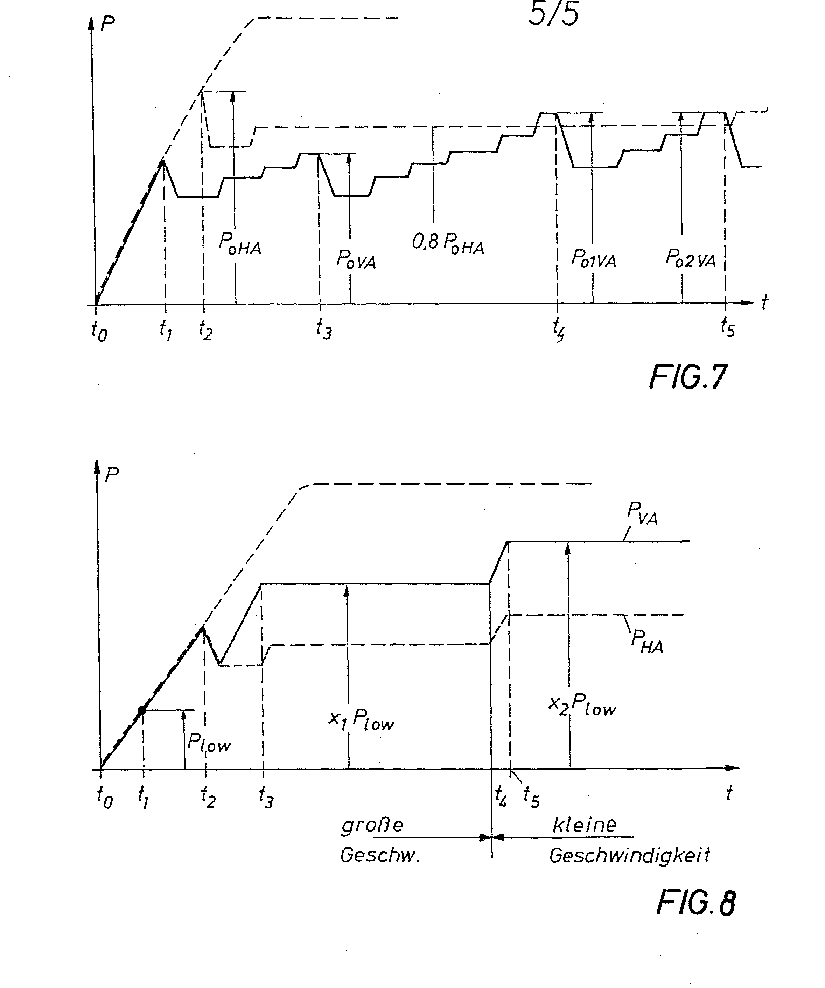

In Fig. 6, die eine Ansteuerschaltung für das System der Fig. 5 zeigt, entspricht der Block 60, dem Block 14 der Fig. 2 und die Ventile 55' und 56' den Ventilen 55 und 56 der Fig. 5. Diese Ventile werden über Leitungen 61 und 62 im Sinne einer Druckkonstanthaltung und über Leitungen 63 und 64 im Sinne einer Druckabsenkung angesteuert. Druckgeber 57' und 58' entsprechen den Gebern 57 und 58 der Fig. 5. Den Gebern 57' und 58' sind Speicher 65 und 66 nachgeschaltet, die wiederum mit Vergleichern 67 und 68 verbunden sind. Mit 69 ist ein Zähler bezeichnet, mit 70 und 73 bistabile Glieder, mit 71, 74 und 75 Und-Gatter, mit 72 ein Oder-Gatter und mit 76 ein Tor.

Unter Bezugnahme auf die Verläufe der Fig. 7 wird nun die Wirkungsweise des Systems der Fig. 6 beschrieben. Bei $t_0$ beginnt wieder die Bremsung, bei $t_1$ wird im Vorderachskreis (ausgezogener Verlauf) Druck abgebaut. Im Vorderachsbremskreis laufen danach Regelzyklen in bekannter Weise ab.

Im Hinterachsbremskreis (gestrichelter Verlauf) läuft der Druckanstieg bei dieser Lösung weiter bis auch dort Blockierneigung auftritt und Druckabbau mit anschließender Konstanthaltung erfolgt. Der Druckwert $P_{oHA}$ im Hinterachskreis zu Beginn der Druckabsenkung ($t_2$) wird im Speicher 66 gespeichert. Der Vergleicher 68 gibt ein Signal ab, wenn nachfolgend der Druck im Hinterachsbremskreis auf z.B. $0,8 \cdot P_{oHA}$ anwächst. Dieses Signal kippt das bistabile Glied 70, das nun den Druck im Hinterachsbremskreis konstant hält.

...

Im Speicher 65 wird anschließend der Druck $P_{oVA}$ des Vorderachskreises zu Beginn der nächsten Druckabsenkung ($t_3$) gespeichert. Das Einspeichersignal entsteht zu Beginn des
Druckabsenksignals auf Leitung 63 vorausgesetzt, daß das
bistabile Glied 70 gekippt und damit das Und-Gatter 71
durchlässig und das bistabile Glied 73 noch nicht gekippt
ist und damit das Und-Gatter 74 ebenfalls durchlässig ist;
das bistabile Glied 73 wird durch diesen Einspeicherimpuls
ebenfalls gekippt und sperrt danach das Und-Gatter 74 und
macht Und-Gatter 75 durchlässig. Hierdurch wird beim Auftreten folgender Druckabsenksignale auf der Leitung 63 das
Tor 76 geöffnet, sodaß die den Drucken $P_{o1VA}$ und $P_{o2VA}$ entsprechenden Signale mit dem gespeicherten Signal ($P_{oVA}$)
verglichen werden. Der Vergleicher gibt ein Signal zum Zähler 69, wenn die Drucke $P_{o1VA}$ und $P_{o2VA}$ den Druck $P_{oVA}$ um
einen gegebenen Wert übersteigen. Der Zähler 69 ist so eingestellt, daß er nach zweimaligem Übersteigen ein Signal
abgibt, das bistabile Glied 70 rückkippt und damit die Konstanthaltephase im Hinterachskreis beendet. Der Druck steigt
wieder gepulst an, bis wieder Blockierneigung auftritt. Das
bistabile Glied 73 kann mit dem bistabilen Glied 70 rückgesetzt werden.

Man kann den vorhandenen Druckmesser für die Vorderräder
noch zusätzlich dazu ausnutzen, zu entscheiden, ob der
Druck an den Vorderrädern nach select-low oder select-high
geregelt werden soll. So kann man z.B. eine Druckschwelle
von (bei PKW) z.B. 60 bar festlegen ab dem auf jeden Fall
nach select-low geregelt wird. Hierdurch wird eine Umschaltung auf select-high, die bei regennasser Fahrbahn und hohem Druck gefährlich wäre, vermieden.

Anhand der Fig. 8, die eine Ventilkombination gemäß Fig. 1
unterstellt, wird eine andere mögliche Beeinflussung der

...

R. 18 490
0122570

select-Umschaltung beschrieben. Hier ist zuerst (von $t_0$ bis $t_1$) an der Vorderachse (ausgezogene Kurve) select-low-Betrieb wirksam. Bei $t_1$ wird eines der Vorderräder instabil. Der daraus resultierende Regelvorgang wird jedoch durch sofortiges Umschalten auf select-high unterbunden und außerdem der augenblickliche Druck $P_{low}$ festgehalten. Nun wird in dem Vorderradkreis ein Druck $X_i . P_{low}$ ($X_1$ ist z.B. 2-3) eingesteuert. Dies ist bei $t_3$ erreicht. Die vorherige kurzzeitige Druckabsenkung bei $t_2$ fand (an sich an den Vorderrädern unerwünscht) wegen der durch eine Instabilität an den Hinterrädern notwendigen Druckabsenkung statt. Ist der Druck $x_i P_{low}$ eingesteuert, wird über das Ventil 10 der Druck konstantgehalten.

In Fig. 8 ist noch der Fall beinhaltet, daß der Faktor X in seiner Größe von der Fahrzeuggeschwindigkeit abhängt und zwar so, daß bis zu einer Geschwindigkeitsschwelle $S_X$ ein Faktor $X_2 > X_1$ benutzt wird und jenseits dieser Schwelle $S_X$ der kleinere Faktor $X_1$. Folgerichtig wird bei $t_4$, an welchem Zeitpunkt die Geschwindigkeitsschwelle $S_X$ unterschritten wird, $X_2$ wirksam und der Druck nochmals erhöht.

Obwohl eine ähnliche Regelung auch an den Hinterrädern möglich wäre, ist in Fig. 8 für die Hinterräder eine select-low Regelung unterstellt, d.h. bis $t_4$ entspricht der Ablauf für die Hinterräder dem der Fig. 3. Unterstellt ist in Fig. 8 jedoch, daß bei Unterschreiten der Schwelle $S_X$ auch der Druck an den Hinterrädern im Zeitraum $t_4$ bis $t_5$ entsprechend erhöht wird.

R. 18 490

PT-Ka/kn 8. April 1983

ROBERT BOSCH GmbH, 7000 Stuttgart 1

Patentansprüche

1. Antiblockierregelsystem, bei dem gesteuert von die Räder überwachenden Meßwertgebern der Bremsdruck für die Räder jeder Achse gemeinsam von einer die Signale der Meßwertgeber auswertenden Elektronik nach select-low und/oder select-high geregelt wird, dadurch gekennzeichnet, daß wenigstens ein weiterer Meßwertgeber (12; 57, 58) vorgesehen ist, der ein dem Bremsdruck an den Vorderrädern (50) entsprechendes Signal an die Elektronik liefert, und daß die Elektronik derart ausgelegt ist, daß sie 1.) nach einer Druckabsenkung an den Hinterrädern (51) aufgrund einer Blockierneigung an wenigstens einem dieser Räder dort einen Druck $P_{oHA}$ einsteuert, der unterhalb von dem Druck liegt, bei dem die Blockierneigung auftrat, daß sie 2) danach den Druck konstant hält bis der geregelte Maximaldruck $P_{VA}$ an den Vorderrädern (50) sich in einem Folgezyklus in einem vorgegebenem Maß gegenüber dem Maximaldruck $P_{oVA}$ in einem vorhergehenden Zyklus erhöht hat und daß sie danach den Druck im Hinterachskreis (II) erhöht.

2. Antiblockierregelsystem nach Anspruch 1, dadurch gekennzeichnet, daß der Hinterachse ebenfalls ein Meßwertgeber (58) zur Gewinnung eines druckabhängigen Signals zugeordnet ist und daß der Druck an den Hinterrädern (51) nach einer Druckabsenkung auf einen vorgegebenen Abstand zum Druck bei Beginn der Absenkung eingesteuert wird.

...

3. Antiblockierregelsystem nach einem der Ansprüche 1 oder 2, dadurch gekennzeichnet, daß die Druckmessung durch Auswertung der Stellung eines den Druck erzeugenden Kolbens (2) erfolgt.

4. Antiblockierregelsystem nach einem der Ansprüche 1 bis 3 in Anwendung bei einem Bremssystem, bei dem der Druck in einem Bremskreis (II) direkt durch ein Bremsventil (5) erzeugt wird und im anderen Bremskreis (I) durch einen Hauptbremszylinder (1), der über eine Steuerkammer (3) vom durch das Bremsventil (15) eingesteuerten Druck beaufschlagt wird, erzeugt wird, dadurch gekennzeichnet, daß ein Mehrstellungs-Bremsdrucksteuerventil (10) zwischen dem Bremsventil (5) einerseits und den Bremszylindern des einen Bremskreises (II) sowie der Steuerkammer (3) andererseits eingeschaltet ist, das wenigstens einen gemeinsamen Druckaufbau, eine gemeinsame Druckkonstanthaltung und einen gemeinsamen Druckabbau an den angeschlossenen Ausgängen zu dem einen Bremskreis (II) bzw. der Steuerkammer (3) zuläßt und daß zwischen den zum einen Bremskreis (II) direkt führenden Ausgang und wenigstens einem Radbremszylinder ein Sperrventil (11) eingeschaltet ist.

5. Antiblockierregelsystem nach Anspruch 4, dadurch gekennzeichnet, daß bei Zuordnung je eines Bremskreises zu einer Achse beide Bremszylinder der Hinterachse an den Ausgang des Sperrventils (11) angeschaltet sind.

6. Antiblockierregelsystem nach Anspruch 4, dadurch gekennzeichnet, daß bei diagonaler Bremskreisaufteilung das Sperrventil (43) in die Zuleitung zum Hinterachsbremszylinder eingeschaltet ist und daß zwischen den Ausgang des Hauptbremszylinders (5) und dem daran angeschlossenen anderen Hinterachsbremszylinder ein weiteres Sperrventil (42) eingeschaltet ist.

...

7. Antiblockierregelsystem nach Anspruch 6, dadurch gekennzeichnet, daß die beiden Sperrventile (42 und 43) einen gemeinsamen Betätigungsmagneten (44) aufweisen.

8. Antiblockierregelsystem nach einem der Ansprüche 1 bis 7, dadurch gekennzeichnet, daß das dem Bremsdruck an den Vorderrädern entsprechende Signal zur Umschaltung zwischen den Regelungsarten select-low und select-high benutzt wird.

9. Antiblockierregelsystem nach Anspruch 8, dadurch gekennzeichnet, daß ab einem vorgegebenen relativ hohem Druckwert (z.B. bei PKW größer als 60 bar) ohne daß bei select-low Betrieb eine Instabilität an einem Rad auftritt, eine Umschaltung nach select-high gesperrt wird.

10. Antiblockierregelsystem nach Anspruch 8, dadurch gekennzeichnet, daß der Druck $P_{low}$ an den Vorderradbremsen bestimmt wird, bei dem bei Regelungsart select-low eine Instabilität eines Rads festgestellt wird, daß sofort auf Regelungsart select-high umgeschaltet wird und daß an den Vorderradbremsen ein Druck $x_1 P_{low}$ ($x_1 = 2-3$) eingesteuert wird.

11. Antiblockierregelsystem nach Anspruch 10, dadurch gegekennzeichnet, daß auch an den Hinterradbremsen auf select-high umgeschaltet wird und daß der Druck an den Hinterrädern um einen ähnlich hohen Faktor $x_3$ erhöht wird.

12. Antiblockierregelsystem nach Anspruch 10 oder 11, dadurch gekennzeichnet, daß die Faktoren $x_1$ und/oder $x_3$ von der Geschwindigkeit des Fahrzeugs abhängig sind derart, daß der Faktor mit abnehmender Geschwindigkeit zunimmt.

...

13. Antiblockierregelsystem nach Anspruch 12, dadurch gekennzeichnet, daß ab einer vorgegebenen Geschwindigkeitsschwelle $S_x$ der oder die Faktoren $X_1$ und/oder $X_3$ in kleinere Faktoren $X_2$ und/oder $X_4$ übergehen.

0122570

1/5

FIG.1

FIG.2

3/5

$P_{oVA}$  $P_{oHA}$  $P_{1VA}$

$t_0$  $t_1$  $t_2$  $t_3$  $t_4$  $t_5$  $t_6$  $t_7$  $t_8$  $t_9$  $t$

FIG. 3

von 1    von 10

I        II

40    42  44  43    41

FIG.4

FIG.5

FIG.6

P

$P_{oHA}$   $P_{oVA}$   $0,8\,P_{oHA}$   $P_{o1VA}$   $P_{o2VA}$

$t_0$   $t_1$   $t_2$   $t_3$   $t_4$   $t_5$   t

FIG.7

P

$P_{VA}$

$P_{HA}$

$x_1 P_{low}$   $x_2 P_{low}$

$P_{low}$

$t_0$   $t_1$   $t_2$   $t_3$   $t_4$   $t_5$   t

große
Geschw.   kleine
Geschwindigkeit

FIG.8